(19) Europäisches Patentamt
European Patent Office
Office européen des brevets

(11) Numéro de publication: **0 039 266**
**B1**

(12) **FASCICULE DE BREVET EUROPEEN**

(45) Date de publication du fascicule du brevet: **24.10.84**

(51) Int. Cl.³: **C 01 B 17/50**, B 01 D 53/36

(21) Numéro de dépôt: **81400574.0**

(22) Date de dépôt: **10.04.81**

(54) **Procédé d'oxydation de l'hydrogène sulfuré et de composés organiques du soufre.**

(30) Priorité: **23.04.80 FR 8009127**
**23.04.80 FR 8009128**

(43) Date de publication de la demande:
**04.11.81 Bulletin 81/44**

(45) Mention de la délivrance du brevet:
**24.10.84 Bulletin 84/43**

(84) Etats contractants désignés:
**AT BE CH DE FR GB IT LI NL SE**

(56) Documents cités:
**FR - A - 2 144 148**
**FR - A - 2 369 209**
**FR - A - 2 430 916**
**US - A - 4 169 136**

**CHEMICAL ABSTRACTS, vol. 91, no. 8, août 1979, page 301, *abrégé* 61950k, COLUMBUS OHIO (US)**
**CHEMICAL ABSTRACTS, vol. 90, no. 22, mai 1979, page 345, abrégé 173964d, COLUMBUS OHIO (US)**

(73) Titulaire: **RHONE-POULENC SPECIALITES CHIMIQUES, "Les Miroirs" 18, Avenue d'Alsace, F-92400 Courbevoie (FR)**

(72) Inventeur: **Dupin, Thierry, 7, rue Robert de Luzarches, F-95140 Garges/Les/Gonesse (FR)**
Inventeur: **Dupuy, Georges, 4, rue du Stand, F-92260 Fontenay/Aux/Roses (FR)**

(74) Mandataire: **Savina, Jacques et al, RHONE-POULENC RECHERCHES Service Brevets Chimie et Polymères 25, Quai Paul Doumer, F-92408 Courbevoie Cedex (FR)**

**EP 0 039 266 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé pour l'oxydation de l'hydrogène sulfuré et des composés organiques du soufre en dioxyde de soufre.

Certains effluents industriels et en particulier les effluents provenant des unités Claus, contiennent du soufre et/ou des composés polluants oxydables du soufre qui doivent être traités de manière à être transformés par oxydation en anhydride sulfureux. Les composés du soufre notamment présents dans ces effluents sont principalement l'hydrogène sulfuré et des composés organiques du soufre tels que le sulfure de carbone et/ou l'oxysulfure de carbone et/ou les mercaptans.

Il est connu de traiter des effluents contenant de l'hydrogène sulfuré en les brûlant à hautes températures mais cette méthode est aujourd'hui obsolète tant à cause de la consommation d'énergie importante qu'elle entraîne que techniquement par la quantité d'oxygène qu'elle nécessite.

Par ailleurs, il a déjà été proposé des procédés catalytiques pour traiter des gaz contenant de l'hydrogène sulfuré; mais, ces procédés présentent les inconvénients de n'être pas assez actifs catalytiquement, de ne pas réaliser l'oxydation complète de l'hydrogène sulfuré à une température suffisament basse et de présenter une durée de vie insuffisante.

Il est également connu d'après la demande de brevet français n° 2144148 d'oxyder des composés du soufre contenus dans un gaz en anhydride sulfureux par transformation catalytique à 400–600°C en présence d'un catalyseur comprenant une phase active constituée d'un oxyde mixte du type spinelle de formule générale

$M_x Cr_z Fe_{2-z} O_u$

dans laquelle M = Zn, Cu, Co, Ni, Mg, Mn, Cd. Un tel catalyseur, outre ses performances peu satisfaisantes, présente l'inconvénient considérable de nécessiter pour sa préparation une calcination à une température d'au moins 650°C pendant 4 heures pour obtenir la structure spinelle.

Il est aussi connu du document JP-A-7932168 d'utiliser pour l'oxydation de $H_2S$ un catalyseur à base de $TiO_2$ et comportant un ou plusieurs oxydes de Mo, W, Cz, V, Fe, Co, Ni, Cu ou Bi, par exemple un catalyseur $TiO_2$–Mo $O_2$ avec un rapport Ti/Mo de 9:1.

La demanderesse a mis au point des catalyseurs qui présentent une très grande activité catalytique pour réaliser l'oxydation en phase gazeuse de l'hydrogène sulfuré et des composés organiques du soufre et éventuellement du soufre en dioxyde de soufre. De plus, ces catalyseurs présentent une durée de vie exceptionnelle et leur préparation se fait à une température inférieure à 550°C, leur phase active ne contenant pas d'oxyde mixte du type spinelle.

Les catalyseurs, selon la présente invention, comportent d'une part de la silice ou de l'oxyde de zirconium ou leurs mélanges ou de la silice-magnésie ou des zéolithes, et d'autre part des éléments catalytiquement actifs pris dans les colonnes Ib, IIb, IIIb, Vb, VIb, VIIb, VIII et Va de la classification périodique des éléments. Ces catalyseurs permettent notamment de réaliser l'oxydation en anhydride sulfureux des composés oxydables du soufre tels que l'hydrogène sulfuré et/ou le sulfure de carbone et/ou l'oxysulfure decarbone et/ou les mercaptans et éventuellement du soufre.

La présente invention concerne un procédé d'oxydation en anhydride sulfureux de l'hydrogène sulfuré et des composés organiques du soufre et éventuellement du soufre en phase gazeuse caractérisé en ce que l'on fait passer un gaz contenant de l'hydrogène sulfuré et au moins un composé organique du soufre et éventuellement du soufre sur un catalyseur comprenant d'une part de la silice ou de l'oxyde de zirconium ou de la silice-magnésie ou de la silice-zircone ou une zéolithe et, d'autre part, au moins un des éléments pris dans le groupe constitué par: le cuivre, l'argent, le zinc, le cadmium, l'yttrium, les lanthanides, le chrome, le molybdène, le tungstène, le manganèse, le fer, le cobalt, le rhodium, l'iridium, le nickel, le palladium, le platine, l'étain, le bismuth, le catalyseur ne comportant pas d'oxyde mixte du type-spinelle.

De préférence, les catalyseurs selon l'invention comprennent d'une part de la silice ou de l'oxyde de zirconium ou de la silice-magnésie ou de la silice-zircone ou une zéolithe et, d'autre part, au moins un élément pris dans le groupe A constitué par: le cuivre, l'argent, le molybdène, le tungstène, le fer, le bismuth, et au moins un élément pris dans le groupe B constitué par les lanthanides, le chrome, le cobalt, le rhodium, l'iridium, le nickel, le palladium et le platine, l'étain.

Les catalyseurs selon l'invention peuvent être préparés selon les procédés classiques et en particulier par imprégnation d'un support à base de silice ou d'oxyde de zirconium ou de silice-magnésie ou de silice-zircone ou de zéolithe, par les éléments catalytiquement actifs ou leurs précurseurs ou malaxage d'une poudre de silice ou d'oxyde de zirconium ou des mélanges de ceux-ci ou de zéolithes avec des précurseurs des éléments catalytiquement actifs.

Ils peuvent également être préparés par enrobage d'un oxyde réfractaire avec, d'une part, des précurseurs de silice ou de l'oxyde de zirconium ou des mélanges de ceux-ci et d'autre part, avec les éléments catalytiquement actifs ou leurs précurseurs. On entend par précurseur selon l'invention tout composé susceptible de donner par chauffage, l'élément ou l'oxyde correspondant.

Quel que soit leur procédé de préparation, les catalyseurs selon l'invention sont dans une dernière étape calcinés à une température inférieure à 550°C de façon à ce qu'ils ne comportent pas d'oxyde mixte de type spinelle; ils sont généralement calcinés à une température comprise entre

300°C et 550°C et de préférence entre 350°C et 450°C.

Les catalyseurs selon l'invention comportant un support d'oxyde de zirconium présentent de préférence une surface spécifique comprise entre 5 et 250 $m^2/g$ et plus particulièrement entre 20 et 150 $m^2/g$.

Les catalyseurs selon l'invention comportant un support de silice ou de silice-magnésie ou de silice-zircone présentent de préférence une surface spécifique comprise entre 50 et 600 $m^2/g$ et plus particulièrement entre 80 et 500 $m^2/g$.

Les zéolithes que l'on peut mettre en œuvre selon l'invention sont du type faujasite, mordénite, ferriérite.

Le rapport atomique des éléments catalytiquement actifs présents dans le catalyseur par rapport au silicium ou au zirconium, à la magnésie ou au mélange de ces éléments est compris entre 0,00005 à 0,1.

Dans le cas des zéolithes, le pourcentage en poids des éléments catalytiquement actifs présents dans le catalyseur par rapport à la zéolithe est compris entre 0,05% et 10%.

Par ailleurs, selon la mise en œuvre préférée de l'invention lorsque l'on ne met pas en œuvre les métaux précieux, le rapport atomique entre la totalité des éléments du groupe A et la totalité des éléments du groupe B présents dans le catalyseur est de préférence compris entre 0,1 et 10 et plus particulièrement 0,5 et 5.

Lorsque l'on met en œuvre les métaux précieux du groupe VIII comme éléments catalytiquement actifs du groupe B le rapport atomique défini ci-dessus est de préférence compris entre 20 et 1000 et plus particulièrement entre 50 et 400.

Le procédé d'oxydation en anhydride sulfureux de l'hydrogène sulfuré et des composés organiques du soufre et éventuellement du soufre en phase gazeuse en présence du catalyseur de l'invention peut être réalisé par mise en contact d'un gaz renfermant de l'oxygène moléculaire avec l'effluent contenant lesdits produits. Ce gaz est généralement l'air et éventuellement de l'air enrichi en oxygène au moins égale et de préférence supérieure à la quantité stoechiométrique nécessaire pour l'oxydation en anhydride sulfureux de la totalité des produits. Avantageusement, la quantité d'oxygène présente dans le gaz représente un excès de 15 à 100% par rapport à la stoechiométrie.

Le procédé de l'invention est mis en œuvre à des températures supérieures à 150°C et de préférence à des températures comprises entre 200 et 550°C.

La composition des gaz que l'on peut traiter selon le procédé de l'invention peut varier dans de larges limites. Généralement les effluents industriels que l'on peut traiter selon l'invention contiennent de préférence de l'ordre de 0,5 à 5% en volume de composés soufrés.

Les quantités de catalyseurs utilisées sont de préférence telles que la VVH est comprise entre 1000 et 30 000 et avantageusement entre 1500 et 10 000 (la VVH représentant le volume de gaz traité par volume de catalyseur et par heure).

Les exemples suivants illustrent l'invention sans en limiter la portée.

Exemple 1 (comparatif)

Une suspension d'oxyde de titane obtenue après hydrolyse et filtration dans le procédé classique d'attaque sulfurique de l'ilménite est séchée par étuvage à 150°C pendant 36 heures.

La poudre obtenue est malaxée pendant 20 minutes en présence d'eau et de polyacrylamide.

Le mélange obtenu est extrudé à travers une filière de 3 mm. Les extrudés obtenus sont séchés à 110°C pendant 24 heures puis calcinés à 430°C pendant 2 heures.

Ce support d'oxyde de titane est imprégné par une solution de nitrate ferrique, puis calciné à 400°C pendant 1 heure.

Le catalyseur fini à un rapport atomique:

$\frac{Fe}{Ti}$ égal à 0,06

et une surface spécifique mesurée par la méthode BET (SBE) de 117 $m^2g^{-1}$.

Exemple 2 (comparatif)

On imprègne le support obtenu suivant l'exemple n° 1 d'une solution de nitrate ferrique et nitratede lanthane. Le catalyseur est séché à 110°C une nuit puis calciné à 400°C 1 heure et a les caractéristiques suivantes:

Rapport atomique: $\frac{Fe + La}{Ti} = 0,09$ $\frac{La}{Fe} = 2$

Surface spécifique: SBE = 109 $M^2g^{-1}$

Exemple 3 (comparatif)

Le catalyseur de l'exemple n° 1 est imprégné une deuxième fois par une solution de chlorure de palladium. Le produit est séché à 110°C 8 heures, puis calciné à 350°C pendant 1 heure. Le catalyseur possède les caractéristiques suivantes:

Surface spécifique: SBE = 104 $m^2g^{-1}$

Rapport atomique: $\frac{Fe + Pd}{Ti} = 0,0603$ $\frac{Fe}{Pd} = 200$

Exemple 4 (comparatif)

Le catalyseur de l'exemple n° 1 est imprégné une seconde fois par une solution d'acide chloro-platinique, séché à 110°C pendant 24 heures puis calciné à 400°C pendant 1 heure, le catalyseur possède les caractéristiques suivantes:

Surface spécifique: SBE = 106 $m^2g^{-1}$

Rapport atomique: $\frac{Fe + Pt}{Ti} = 0,0606$ $\frac{Fe}{Pt} = 100$

Exemple 5 (comparatif)

On imprègne le support obtenu suivant l'exemple n° 1 par une solution de nitrate d'argent. Le produit est séché à 110°C pendant une

nuit, puis calciné à 450°C pendant 2 heures. Le catalyseur a les caractéristiques suivantes:

Surface spécifique: SBE = 95 $m^2g^{-1}$

Rapport atomique: $\frac{Ag}{Ti} = 0{,}04$

Exemple 6 (comparatif)

Le support obtenu suivant l'exemple n° 1 est imprégné par une solution de nitrate d'argent et de nitrate céreux, il est ensuite séché à 150°C pendant 4 heures puis calciné à 400°C pendant 2 heures. Le catalyseur fini a les caractéristiques suivantes:

Surface spécifique: SBE = 103 $m^2g^{-1}$

Rapport atomique: $\frac{Ag+Ce}{Ti} = 0{,}08$ $\frac{Ag}{Ce} = 1$

Exemple 7 (comparatif)

Dans l'exemple précédent le nitrate céreux est remplacé par du nitrate de cobalt. Le catalyseur a alors les caractéristiques suivantes:

Surface spécifique: SBE = 102 $m^2g^{-1}$

Rapport atomique: $\frac{Ag+Co}{Ti} = 0{,}07$ $\frac{Ag}{Co} = 1{,}5$

Exemple 8 (comparatif)

La poudre obtenue après étuvage de suspension d'oxyde de titane obtenue par attaque sulfurique de l'ilménite, hydrolyse et filtration, est malaxée pendant 40 minutes en présence d'eau, de polyacrylamide, et d'acide métatungstique. La poudre obtenue est extrudée à travers une filière de 3 mm, les extrudés sont séchés à 110°C pendant 24 heures, puis calcinés à 500°C pendant 2 heures. Le catalyseur a alors les caractéristiques suivantes:

Surface spécifique: SBE = 92 $m^2g^{-1}$

Rapport atomique: $\frac{W}{Ti} = 0{,}08$

Exemple 9 (comparatif)

Le catalyseur obtenu au cours de l'exemple n° 8 est ensuite imprégné par une solution d'acétate de néodyme-praséodyme, séché à 150°C 4 heures, puis calciné à 450°C pendant 2 heures. Le catalyseur a les caractéristiques suivantes:

Surface spécifique: SBE = 91 $m^2g^{-1}$

Rapport atomique: $\frac{W+Nd+Pr}{Ti} = 0{,}10$ $\frac{W}{Nd+Pr} = 4$

Exemple 10 (comparatif)

Le catalyseur obtenu au cours de l'exemple n° 8 est ensuite imprégné par une solution de nitrate de nickel séché à 150°C pendant 4 heures puis calciné à 450°C pendant 2 heures. Le catalyseur a les caractéristiques suivantes:

Surface spécifique: SBE = 89 $m^2g^{-1}$

Rapport atomique: $\frac{W+Ni}{Ti} = 0{,}12$ $\frac{W}{Ni} = 2$

Exemple 11

On utilise un support de silice vendu par la Société Rhône-Poulenc, ce support a une surface spécifique de 480 $m^2g^{-1}$.

On imprègne ce support par une solution de sulfate ferreux légèrement acidifiée par l'acide sulfurique. On le sèche à 150°C pendant 2 heures et on le calcine à 450°C pendant deux heures. Le catalyseur a les caractéristiques suivantes:

Surface spécifique: SBE = 410 $m^2g^{-1}$

Rapport atomique: $\frac{Fe}{Si} = 0{,}05$

Exemple 12

On imprègne le support de l'exemple n° 11 par une solution dechlorure cuivreux ammoniacal, on le sèche à 110°C pendant 8 heures et on le calcine à 450°C pendant 2 heures. Le catalyseur a les caractéristiques suivantes:

Surface spécifique: SBE = 380 $m^2g^{-1}$

Rapport atomique: $\frac{Cu}{Si} = 0{,}04$

Exemple 13 (comparatif)

On utilise un support constitué de silice-titane en proportion de 70% en poids de silice et 30% en poids de titane, ce support a une surface spécifique de 350 $m^2/g$.

On imprègne ce support avec une solution de chlorure cuivreux ammoniacal, on sèche à 150°C et on imprègne une nouvelle fois par une solution de nitrate ferrique, on calcine à 400°C pendant 2 heures. Le catalyseur a les caractéristiques suivantes:

Surface spécifique: SBE = 325 $m^2/G$

Rapport atomique: $\frac{Cu+Fe}{Si+Ti} = 0{,}06$ $\frac{Cu}{Fe} = 2$

Exemple 14

Le catalyseur de l'exemple n° 11 est imprégné par une solution de chlorure d'iridium, séché à 110°C pendant 24 heures puis calciné à 400°C pendant 2 heures. Le catalyseur a les caractéristiques suivantes:

Surface spécifique: SBE = 379 $m^2g^{-1}$

Rapport atomique: $\frac{Cu+Ir}{Si} = 0{,}06015$ $\frac{Cu}{Ir} = 400$

Exemple 15

Le support de silice utilisé dans l'exemple n° 11 est imprégné par une solution de paramolybdate d'ammonium, séché à 110°C une nuit, puis calciné à 450°C pendant deux heures. Le catalyseur a les caractéristiques suivantes:

Surface spécifique: SBE = 370 $m^2g^{-1}$

Rapport atomique: $\frac{Mo}{Si} = 0{,}06$

Exemple 16

On utilise un support constitué desilice-magnésie comportant 60% en poids de silice et

40% en poids de magnésie, ce support a une surface spécifique de 240 $m^2/g$.

On imprègne ce support avec une solution de peramolybdate d'ammonium, on le sèche à 150°C pendant 4 heures et on le calcine à 400°C pendant 2 heures. Le catalyseur a les caractéristiques suivantes:

Surface spécifique: SBE = 215 $m^2/g$

Rapport atomique: $\frac{Mo}{Si + Mg} = 0{,}05$

Exemple 17

Le support de silice utilisé dans l'exemple n° 11 est imprégné par une solution de nitrate de bismuth dans l'acide nitrique, séché à 110°C pendant 24 heures, puis calciné à 450°C pendant 2 heures. Le catalyseur a les caractéristiques suivantes:

Surface spécifique: SBE = 373 $m^2g^{-1}$

Rapport atomique: $\frac{Bi}{Si} = 0{,}04$

Exemple 18

Le catalyseur de l'exemple n° 17 est imprégné par une solution de chlorure de rhodium, séché à 110°C pendant 24 heures puis calciné à 400°C pendant 2 heures. Le catalyseur a les caractéristiques suivantes:

Surface spécifique: SBE = 371 $m^2g^{-1}$

Rapport atomique: $\frac{Bi + Rh}{Si} = 0{,}0401$ $\frac{Bi}{Rh} = 400$

Exemple 19

Un support en oxyde de zirconium de surface spécifique 82 $m^2g^{-1}$ est imprégné par une solution de nitrate ferrique, séché à 150°C pendant 8 heures puis calciné à 450°C pendant 2 heures. Le catalyseur a les caractéristiques suivantes:

Surface spécifique: SBE = 76 $m^2g^{-1}$

Rapport atomique: $\frac{Fe}{Zr} = 0{,}04$

Exemple 20

Le support utilisé dans l'exemple précédent est imprégné par une solution de nitrate de fer et de nitrate de lanthane, séché à 110°C pendant 24 heures, puis calciné à 450°C pendant 2 heures. Le catalyseur a les caractéristiques suivantes:

Surface spécifique: SBE = 72 $m^2g^{-1}$

Rapport atomique: $\frac{Fe + La}{Zr} = 0{,}08$ $\frac{Fe}{La} = 1$

Exemple 21

Le catalyseur obtenu dans l'exemple n° 19 est imprégné par une solution de chlorure stanneux, séché à 150°C pendant 4 heures puis calciné à 400°C pendant 2 heures. Le catalyseur a les propriétés suivantes:

Surface spécifique: SBE = 68 $m^2g^{-1}$

Rapport atomique: $\frac{Fe + Sn}{Zr} = 0{,}06$ $\frac{Fe}{Sn} = 2$

Exemple 22

Un support en zéolithe du type NaX, de surface spécifique 753 $m^2g^{-1}$ est échangé par une solution de nitrate d'argent; le produit est séché à 110°C pendant 24 heures, puis calciné à 450°C pendant 2 heures. Le catalyseur a les caractéristiques suivantes:

SBE = 722 $m^2g^{-1}$

et contient 6% d'argent.

Exemple 23

Le présent exemple illustre l'application des catalyseurs obtenus suivant les exemples précédents dont l'oxydation en phase gazeuse de l'hydrogène sulfuré et des composés organiques du soufre.

On envoie dans un réacteur contenant le catalyseur un gaz de composition volumique:

$H_2S$ : 800 ppm (parties par million)
COS : 100 ppm
$CS_2$ : 500 ppm
$SO_2$ : 400 ppm
$O_2$ : 2%
$H_2O$ : 30%
$N_2$ : 67,82%

La VVH est de 1800 et la température d'entrée des gaz est de 380°C.

Les résultats obtenus avec chacun des catalyseurs sont consignés dans le tableau suivant:

| Catalyseur de l'exemple n° | Conversion de l'$H_2S$ en % | Conversion de $CS_2$ en % | Conversion de COS en % |
|---|---|---|---|
| 1 | | 63 | 45 |
| 2 | | 84 | 63 |
| 3 | S | 95 | 86 |
| 4 | U | 98 | 89 |
| 5 | P | 55 | 66 |
| 6 | E | 79 | 69 |
| 7 | R | 73 | 75 |
| 8 | I | 83 | 73 |
| 9 | E | 92 | 84 |
| 10 | U | 88 | 77 |
| 11 | R | 82 | 63 |
| 12 | E | 64 | 47 |
| 13 | | 88 | 65 |
| 14 | | 94 | 92 |
| 15 | A | 75 | 64 |
| 16 | | 83 | 69 |
| 17 | 99 % | 61 | 36 |
| 18 | | 91 | 65 |
| 19 | | 71 | 54 |
| 20 | | 89 | 67 |
| 21 | | 86 | 73 |
| 22 | | 93 | 66 |

Exemple 24 (comparatif)

Le présent exemple illustre l'application des catalyseurs obtenus suivant les exemples précédents à l'oxydation d'un gaz contenant des composés organiques du soufre mais pas de $H_2S$.

On envoie dans un réacteur contenant le catalyseur un gaz de composition volumique:

$CS_2$ : 1200 ppm
COS: 500 ppm
$O_2$ : 2%
$H_2O$ : 22%
$N_2$ : 74,95%

La VVH est de 1800 et la température d'entrée des gaz 350°C.

Les résultats obtenus avec chacun des catalyseurs sont consignés dans le tableau suivant:

| Catalyseur de l'exemple | Conversion de $CS_2$ en % | Conversion de COS en % |
|---|---|---|
| 1 | 85 | 56 |
| 2 | 92 | 56 |
| 3 | 99 | 92 |
| 4 | >99 | 95 |
| 5 | 83 | 65 |
| 6 | 92 | 85 |
| 7 | 89 | 87 |
| 8 | 97 | 85 |
| 9 | 98 | 95 |
| 10 | 94 | 86 |
| 11 | 87 | 59 |
| 12 | 93 | 75 |
| 13 | >99 | 98 |
| 14 | 87 | 74 |
| 15 | 95 | 83 |
| 16 | 76 | 54 |
| 17 | 98 | 79 |
| 18 | 89 | 74 |
| 19 | 94 | 88 |
| 20 | 94 | 89 |
| 21 | 88 | 65 |
| 22 | 98 | 79 |

**Revendications**

1. Procédé d'oxydation en anhydride sulfureux de l'hydrogène sulfuré et des composés organiques du soufre et éventuellement du soufre en phase gazeuse, caractérisé en ce que l'on fait passer un gaz contenant de l'hydrogène sulfuré et au moins un composé organique du soufre et éventuellement du soufre sur un catalyseur comprenant, d'une part, de la silice ou de l'oxyde de zirconium ou de la silice-magnésie ou de la silice-zircone ou une zéolithe et, d'autre part, au moins un des éléments pris dans le groupe constitué par: le cuivre, l'argent, le zinc, le cadmium, l'yttrium, les lanthanides, le chrome, le molybdène, le tungstène, le manganèse, le fer, le cobalt, le rhodium, l'iridium, le nickel, le palladium, le platine, l'étain, le bismuth, le catalyseur ne comportant pas d'oxyde mixte de type spinelle.

2. Procédé selon la revendication 1 caractérisé en ce que le catalyseur comprend, d'une part, de la silice ou de l'oxyde de zirconium ou de la silice-magnésie ou de la silice-zircone ou une zéolithe et, d'autre part, au moins un élément pris dans le groupe A constitué par: le cuivre, l'argent, le molybdène, le tungstène, le fer, le bismuth, et au moins un élément pris dans le groupe B constitué par les lanthanides, le chrome, le cobalt, le rhodium, l'iridium, le nickel, le palladium et le platine, l'étain.

3. Procédé selon la revendication 1 caractérisé en ce que, dans le catalyseur, le rapport atomique des éléments catalytiquement actifs présents dans le catalyseur par rapport au silicium, au zirconium, à la magnésie ou à leurs mélanges est compris entre 0,00005 et 0,1.

4. Procédé selon la revendication 2 caractérisé en ce que, dans le catalyseur, le rapport atomique entre la totalité des éléments du groupe A et la totalité des éléments du groupe B présents dans le catalyseur, à l'exclusion des métaux précieux du groupe VIII, est compris entre 0,1 et 10.

5. Procédé selon la revendication 2 caractérisé en ce que, dans le catalyseur, le rapport atomique entre la totalité des éléments du groupe A et la totalité des métaux précieux du groupe VIII présents dans le catalyseur est compris entre 20 et 1000.

**Patentansprüche**

1. Verfahren zur Oxidation von Schwefelwasserstoff, organischen Schwefelverbindungen und gegebenenfalls Schwefel in der Gasphase zu Schwefeldioxid, dadurch gekennzeichnet, dass man ein Gas, das Schwefelwasserstoff, wenigstens eine organische Schwefelverbindung und gegebenenfalls Schwefel enthält, über einen Katalysator leitet, der einerseits aus Siliciumdioxid oder Zirkoniumoxid oder Siliciumdioxid-Magnesiumoxid oder Siliciumdioxid-Zirkoniumoxid oder einen Zeolithen besteht und andererseits aus wenigstens einem Element aus der Gruppe von Kupfer, Silber, Zink, Cadmium, Yttrium, den Lanthaniden, Chrom, Molybdän, Wolfram, Mangan, Eisen, Kobalt, Rhodium, Iridium, Nickel, Palladium, Platin, Zinn und Wismut, wobei der Katalysator kein Mischoxid des Spinell-Typs enthält.

2. Verfahren nach Anspruch 1, dadurch gekennzeichnet, dass der Katalysator einerseits Siliciumdioxid oder Zirkoniumoxid oder Magnesiumoxid-Siliciumdioxid oder Siliciumdioxid-Zirkoniumoxid oder einen Zeolithen und andererseits wenigstens ein Element aus der von Kupfer, Silber, Molybdän, Wolfram, Eisen, Wismut gebildeten Gruppe A und wenigstens ein Element aus der von den Lanthaniden, Chrom, Kobalt, Rhodium, Iridium, Nickel, Palladium und Platin und Zinn gebildeten Gruppe B enthält.

3. Verfahren nach Anspruch 1, dadurch gekennzeichnet, dass in dem Katalysator das Atomverhältnis zwischen den im Katalysator vorliegenden katalytisch aktiven Elementen und Silicium, Zirkonium, Magnesium oder ihren Mischungen zwischen 0,00005 und 0,1 beträgt.

4. Verfahren nach Anspruch 2, dadurch gekennzeichnet, dass in dem Katalysator das Atomverhältnis zwischen der Gesamtheit der Elemente aus der Gruppe A und der Gesamtheit der Elemente aus der Gruppe B mit Ausnahme der Edelmetalle aus der Gruppe VIII zwischen 0,1 und 10 beträgt.

5. Verfahren nach Anspruch 2, dadurch gekennzeichnet, dass in dem Katalysator das Atomverhältnis zwischen der Gesamtheit der Elemente der Gruppe A und der Gesamtheit der Edelmetalle der Gruppe VIII zwischen 20 und 1000 beträgt.

**Claims**

1. Process for the oxidation of hydrogen sulphide and organic sulphur compounds and, optionally, sulphur in the gas phase to give sulphur dioxide, characterised in that a gas containing hydrogen sulphide and at least one organic sulphur compound and, optionally, sulphur is passed over a catalyst comprising firstly silica or zirconium oxide or silica/magnesia or silica/zirconia or a zeolite and, secondly, at least one of the elements from the group consisting of copper, silver, zinc, cadmium, yttrium, the lanthanides, chromium, molybdenum, tungsten, manganese, iron, cobalt, rhodium, iridium, nickel, palladium, platinum, tin and bismuth, the catalyst not containing a mixed oxide of the spinel type.

2. Process according to Claim 1, characterised in that the catalyst comprises firstly asilica or zirconium oxide or silica/magnesia or silica/zirconia or a zeolite and secondly at least one element taken from the group A consisting of copper, silver, molybdenum, tungsten, iron and bismuth and at least one element taken from the group B consisting of the lanthanides, chromium, cobalt, rhodium, iridium, nickel, palladium, platinum and tin.

3. Process according to Claim 1, characterised in that in the catalyst the atomic ratio of the catalytically active elements present in the catalyst relative to the silicium, zirconium, magnesium or their mixtures is between 0.00005 and 0.1.

4. Process according to Claim 2, characterised in that in the catalyst the atomic ratio of all the elements of group A to all the elements of group B present in the catalyst, with the exception of the precious metals of group VIII, is between 0.1 and 10.

5. Process according to Claim 2, characterised in that in the catalyst the atomic ratio of all the elements of group A to all the precious metals of group VIII present in the catalyst is between 20 and 1000.